# EUROPEAN PATENT APPLICATION

(11) **EP 2 357 415 A1**
(43) Date of publication of application: **17.08.2011**
(21) Application number: 09825763.7
(22) Date of filing: 11.11.2009
(51) Int. Cl.: F24C 15/18, A47J 37/10

(54) **LIFTING MECHANISM OF FRY DEVICE AND FRYING PAN**

(30) Priority: 11.11.2008 CN 200820146317 U
(71) Applicant: Tsann Kuen (Zhangzhou) Enterprise Co., Ltd., Fujian 363000 (CN)
(72) Inventor: LI, Xinzhu, Fujian 363000 (CN)
(74) Representative: Verscht, Thomas Kurt Albert
(86) International application number: PCT/CN2009/074890
(87) International publication number: WO 2010/054588

(57) **Abstract**

A lifting mechanism of a fry device and a frying pan are provided, wherein, the lifting mechanism is connected between a basement (1) and a reflector plate (2), and a heating pipe (3) is set on the reflector plate (2). The lifting mechanism includes a slide rail (4), an inner support bracket (5), an outer support bracket (6), a support basement (7) and a joint pin (8). The slide rail (4) is installed on the basement (1) of the fry device, and the inner support bracket (5) is intercrossed with the outer support bracket (6). Rotatable axes (12) connected with the slide rail (4) are provided on the base ends of the inner support bracket (5) and the outer support bracket (6). Moreover, the support basement (7) is installed on the basement (1) of the fry device and is opened with a longitudinal guide slot (14), and the joint pin (8) is connected with the longitudinal guide slot (14) and through slots (11) of the inner and the outer support brackets (5, 6) slidably.

## Description

### Field of the invention

The present invention relates to a mechanism of a fry device and a frying pan, more particularly, to a lifting mechanism of a fry device and a frying pan with height-adjustable frying plate.

### Background of the invention

The heating pipe of the frying device in the market is directly installed in the base, and the heating pipe can not be lift up or down relative to the base, thus the range of the application is limited. Especially for products like frying pans, because the heating pipe is directly installed in the bottom, it can not adjust the height of the heating pipe freely according to the depth of the frying plate (or inner pot), thus only one depth frying plate can be used in the frying pan, and this can not meet the different requirements of the users.

### Summary of the invention

The primary object of the invention is to provide a lifting mechanism of fry device which obviate the disadvantages in the prior art that the heating pipe of the fry device can not be lift up or down freely.

Another object of the invention is to provide a frying pan.

These and other objects of the invention are achieved by:

A lifting mechanism of a fry device, which is connected between the basement and the reflector plate, and a heating pipe is set on the reflector plate, wherein the lifting mechanism comprising:

a slide rail, an inner support bracket and an outer support bracket, said slide rail is installed on the basement, and the inner support bracket is intercrossed with the outer support bracket, wherein through slots passing through the inside and the outside are provided both in the inner support bracket and in the outer support bracket respectively, and both the top ends of the inner support bracket and the outer support bracket are rotatably connected to the reflector plate, rotatable axes are provided both the bottom ends of the inner support bracket and the outer support bracket respectively, and rotatable axes are connected with the slide rail and can be moved transversally, and

A support basement and a joint pin, the support basement is fixedly installed on the basement and is provided with a longitudinal guide slot, the joint pin is connected with the longitudinal guide slot and through slots of the inner and the outer support brackets slidably.

A returning spring is connected between said rotatable axes of the inner and outer support brackets.

Both the top ends of the inner and outer support brackets are pivotally connected with fixing pieces respectively, said fixing pieces are fixedly connected to the bottom of the reflector plate.

Said joint pin is fit for the longitudinal slot and the through slots of the inner and outer support brackets.

Said inner and outer support brackets are installed symmetrically, said joint pin is positioned in the axis of symmetry.

Another art of the invention is that: A frying pan comprising a body and a cover, wherein the body is provided with a heating pipe inside, said heating pipe is fixedly connected on the reflector plate, a lifting mechanism installed between the basement of the body and the reflector plate, which comprising:

a slide rail, an inner support bracket and an outer support bracket, said slide rail is installed on the inner bottom of the body, and the inner support bracket is intercrossed with the outer support bracket, wherein through slots passing through the inside and the outside are provided both in the inner support bracket and in the outer support bracket respectively, and both the top ends of the inner support bracket and the outer support bracket are rotatably connected to the reflector plate, rotatable axes are provided both the bottom ends of the inner support bracket and the outer support bracket respectively, and rotatable axes are connected with the slide rail and can be moved transversally, and

A support basement and a joint pin, the support basement is fixedly installed on the basement and is provided with a longitudinal guide slot, the joint pin is connected with the longitudinal guide slot and through slots of the inner and the outer support brackets slidably.

A returning spring is connected between said rotatable axes of the inner and outer support brackets.

Compared with the prior art, the present invention has the following advantages: the heating pipe can be lift up or down by the intercrossed mechanism, thus the obviates of the prior art are overcame, the heating pipe of the fry device can be lift up or down freely according to the depth of the frying plate, thus frying plates with different depth can be equipped to the fry device, which can meet the requirement of the users. The intercrossed lifting mechanism of the present invention is to be lift up or down by: the distance between the top ends of the inner and outer support brackets is not changed, and the distance between the bottom ends of the inner and outer support brackets can be adjusted, and the intercrossed position also can be changed. This way has the following advantages: 1, whether in what a height, the support point of the reflector is not changed, and the support is stable; 2. simple structure of the lifting mechanism and convenient assembly; 3/ easy operation. Returning spring is installed in the lifting mechanism, and the heating pipe can be reset by the restoring force of the spring, this is helpful to the user for using frying plate with different height. The inner and outer support brackets are symmetrically set, and the joint pin is installed on the axis of the symmetry, thus the support is stable and the operation is convenient.

### Brief description of the drawings

Preferred embodiment of the present invention will be described in detail with reference to the drawings and examples; Understanding that these drawings depict only typical embodiments of the invention and are not therefore to be considered to be limiting of its scope.

FIG.1 is a perspective view of the lifting mechanism of the fry device in embodiment 1;

FIG.2 is a perspective view of the lifting mechanism of the fry device in a lifting-down position in embodiment 1.

FIG.3 is a front view of the lifting mechanism of the fry device in a lifting-up position in embodiment 1.

FIG.4 is a front view of the lifting mechanism of the fry device in a middle height position in embodiment 1.

FIG.5 is a front view of the lifting mechanism of the fry device in a lifting-down position in embodiment 1.

FIG.6 is a perspective view of the frying pan in embodiment 2.

FIG.7 is a perspective view of the frying pan with inner pot in embodiment 2.

### Detailed description of the preferred embodiments

### Embodiment 1

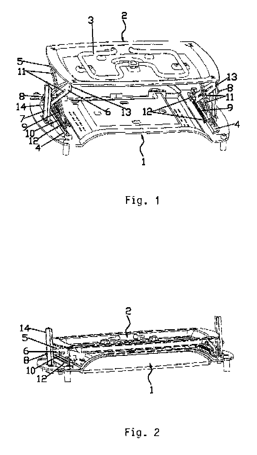

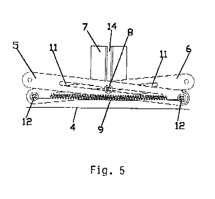

Referring to FIG.1 to FIG.5, a lifting mechanism of the fry device, wherein, the lifting mechanism is connected between a basement 1 and a reflector plate 2, and a heating pipe 3 is set on the reflector plate 2. The lifting mechanism includes a slide rail 4, an inner support bracket 5, an outer support bracket 6, a support basement 7 and a joint pin 8 and a returning spring 9.

The slide rails 4 are installed on the basement 1 of the fry device, and each slide rail 4 is provided with a transversal guide slot 10 which is through the inside and the outside (front left side to right side).

the inner support bracket 5 is intercrossed with the outer support bracket 6 and they are symmetrically installed relative to the middle axis(i.e. the inner support bracket 5 and the outer support bracket 6 are intercrossed symmetry). Both the inner and outer support brackets have through slots 11 (through front left side to right side) in the middle. Rotatable axes 12 are provided both on the bottom ends of the inner support bracket 5 and the outer support bracket 6. the rotatable axes are fit for and are connected through the transversal slot 10 of the slide rail 4 so that the rotatable axes 12 are connected to the slide rail 4 and can be moved transversally, in the transversal movement the ratatable axes 12 are rotatable.

According to requirement, each ends of the rotatable axis is provided with a wheel to raise the stability and decrease the friction. A returning spring 9 is connected between the rotatable axes of the inner and outer support brackets 5,6, thus when the force pressed on the heating pipe 3 is removed, by the returning force of the spring 9, the heating pipe can be rise to the beginning position by the lifting mechanism, to prepare for the next frying plate with different depth, thus the lifting mechanism can cooperated with frying plates with different depth. Both the inner and outer support brackets 5 and 6 are pivotally connected with a fixing piece 13, which is fixedly connected to the bottom of the reflector plate 2.

The support basement 7 is installed on the basement 1 of the fry device and is opened with a longitudinal guide through slot 14. the axis of the joint pin 8 is in the middle and is connected with the longitudinal guide slot 14 and through slots 11 of the inner and the outer support brackets 5, 6 slidably. Herein the joint pin 8 is in the middle axis and is fit to the longitudinal guide slot 14 and through slots 11 of the inner and the outer support brackets 5, 6

Two sets of lifting mechanisms are provided under the reflector plate 2 of the fry device to let the up-down movement of the reflector to be stable. The two sets of lifting mechanisms are symmetrically installed and they are connected to the left side and the right side of the bottom of the reflector plate 2.

When press the heating pipe 3, the distance between the top ends of the inner and the outer support brackets 5, 6 is not changed, but the bottom ends of the inner and the outer support brackets 5, 6 are move away from each other by overcoming the spring force (and the intercrossed position is changed); the joint pin 8 is move downwardly relative to the longitudinal guide slot 14 and the through slots 11 of the inner and the outer support brackets 5, 6.

### Embodiment 2

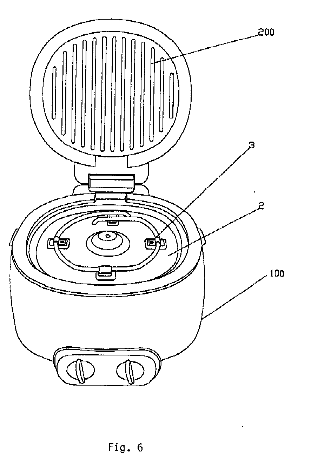

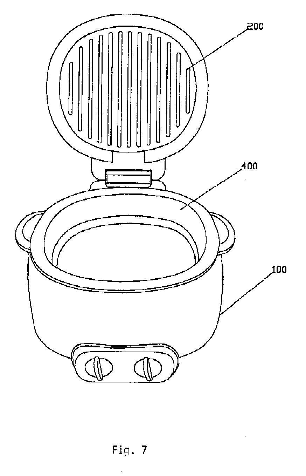

Referring to FIG.6 and FIG.7, a frying pan comprising a body 100, a cover 200 and an inner pot 400, a reflector 2 is installed inside the body 100, a heating pipe 3 is installed on the reflector 2.

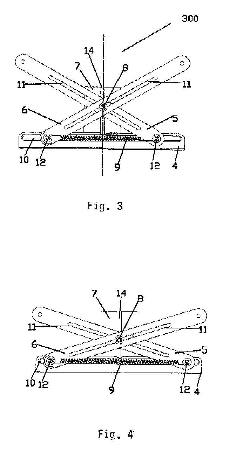

The reflector 2 is connected to the inner bottom of the body 100 by a lifting mechanism 300, The lifting mechanism 300 includes a slide rail 4, an inner support bracket 5, an outer support bracket 6, a support basement 7 and a joint pin 8 and a returning spring 9 (referring to FIG.3 to FIG.5). the slide rail 4 is fixedly installed on the inner bottom of the body 100, and the slide rail 4 is provided with a transversal guide slot 10 which is through the inside and the outside (front left side to right side).

he inner support bracket 5 is intercrossed with the outer support bracket 6 and they are symmetrically installed relative to the middle axis(i.e. the inner support bracket 5 and the outer support bracket 6 are intercrossed symmetry). Both the inner and outer support brackets have through slots 11 (through front left side to right side) in the middle. Rotatable axes 12 are provided both on the bottom ends of the inner support bracket 5 and the outer support bracket 6. the rotatable axes are fit for and are connected through the transversal slot 10 of the slide rail 4 so that the rotatable axes 12 are connected to the the slide rail 4 and can be moved transversally. In the transversal movement the ratatable axes 12 are rotatable. A returning spring 9 is connected between the rotatable axes of the inner and outer support brackets 5,6, thus when the force pressed on the heating pipe 3 is dismissed, by the returning force of the spring 9, the heating pipe rise to the beginning position by the lifting mechanism, to preparing for the next frying plate with different depth, thus the lifting mechanism can cooperated with frying plates with different depth. Both the inner and outer support brackets 5 and 6 are pivotally connected with a fixing piece 13 which is fixedly connected to the bottom of the reflector plate 2.

The support basement 7 is installed on the inner bottom of the body 100 and is opened with a longitudinal guide through slot 14. the axis of the joint pin 8 is in the middle and is connected with the longitudinal guide slot 14 and through slots 11 of the inner and the outer support brackets 5, 6 slidably. Herein the joint pin 8 is in the middle axis and is fit to the longitudinal guide slot 14 and through slots 11 of the inner and the outer support brackets 5, 6

Two sets of lifting mechanisms are provided under the reflector plate 2 of the fry device to let the up-down movement of the reflector to be stable. The two sets of lifting mechanisms are symmetrically installed and they are connected to the left side and the right side of the bottom of the reflector plate 2.

When press the heating pipe 3, the distance between the top ends of the inner and the outer support brackets 5, 6 is not changed, but the bottom ends of the inner and the outer support brackets 5, 6 are away from each other by overcoming the spring force (and the intercrossed position is changed); the joint pin 8 is move downwardly relative to the longitudinal guide slot 14 and the through slots 11 of the inner and the outer support brackets 5, 6.

### Industrial applicability

The invention provided a lifting mechanism of a fry device and a frying pan. The lifting mechanism is connected between the basement of the fry device and the reflector, the heating pipe can be rise up or down by the lifting mechanism, the heating pipe of the fry device can be rise up or down freely according to the depths of the frying plate, thus the fry device can be equipped different frying plates with different depth to meet the requirement of the users.

## Claims

1. A lifting mechanism of a fry device, which is connected between a basement and a reflector plate, and a heating pipe is installed on the reflector plate, wherein the lifting mechanism comprising:
a slide rail, an inner support bracket and an outer support bracket, said slide rail is installed on the basement, and the inner support bracket is intercrossed with the outer support bracket, wherein through slots passing through the inside and the outside are provided both in the inner support bracket and in the outer support bracket, and both the top ends of the inner support bracket and the outer support bracket are rotatably connected to the reflector plate, rotatable axes are provided both on the bottom ends of the inner support bracket and on the outer support bracket, and rotatable axes are connected with the slide rail and can be moved transversally, and
a support basement and a joint pin, the support basement is fixedly installed on the basement and is provided with a longitudinal guide slot, the joint pin is connected with the longitudinal guide slot and through slots of the inner and the outer support brackets slidably.

2. The lifting mechanism of a fry device according to claim 1, wherein a returning spring is connected between said rotatable axes of the inner and outer support brackets.

3. The lifting mechanism of a fry device according to claim 1, wherein both the top ends of the inner and outer support brackets are pivotally connected with fixing pieces, said fixing pieces are fixedly connected to the bottom of the reflector plate.

4. The lifting mechanism of a fry device according to claim 1, wherein said joint pin is fit for the longitudinal slot and the through slots of the inner and outer support brackets.

5. The lifting mechanism of a fry device according to claim 1, wherein said inner and outer support brackets are installed symmetrically, said joint pin is positioned in the axis of symmetry.

6. A frying pan comprising a body and a cover, the body is provided with a heating pipe inside, said heating pipe is fixedly connected on the reflector plate, a lifting mechanism installed between the basement of the body and the reflector plate, wherein the lifting mechanism comprising:
a slide rail, an inner support bracket and an outer support bracket, said slide rail is installed on the inner bottom of the body, and the inner support bracket is intercrossed with the outer support bracket, wherein through slots passing through the inside and the outside are provided both in the inner support bracket and in the outer support bracket, and both the top ends of the inner support bracket and the outer support bracket are rotatably connected to the reflector plate, rotatable axes are provided both on the bottom ends of the inner support bracket and the outer support bracket, and rotatable axes are connected with the slide rail and can be moved transversally, and
a support basement and a joint pin, the support basement is fixedly installed on the basement and is provided with a longitudinal guide slot, the joint pin is connected with the longitudinal guide slot and through slots of the inner and the outer support brackets slidably.

7. The frying pan according to claim 6, wherein a returning spring is connected between said rotatable axes of the inner and outer support brackets.

8. The frying pan according to claim 6, wherein both the top ends of the inner and outer support brackets are pivotally connected with fixing pieces respectively, said fixing pieces are fixedly connected to the bottom of the reflector plate.

9. The frying pan according to claim 6, wherein said joint pin is fit for the longitudinal slot and the through slots of the inner and outer support brackets.

10. The frying pan according to claim 6, wherein said inner and outer support brackets are installed symmetrically, said joint pin is positioned in the axis of symmetry.
